**Europäisches Patentamt**

**European Patent Office**

**Office européen des brevets**

(19)

(11) Veröffentlichungsnummer: **0 135 748**
A2

(12)

# EUROPÄISCHE PATENTANMELDUNG

(21) Anmeldenummer: **84109337.0**

(22) Anmeldetag: **07.08.84**

(51) Int. Cl.⁴: **F 03 D 5/02**

(30) Priorität: **25.08.83 DE 3330650**

(43) Veröffentlichungstag der Anmeldung: **03.04.85**
**Patentblatt 85/14**

(84) Benannte Vertragsstaaten: **CH DE FR GB IT LI SE**

(71) Anmelder: **MTU MOTOREN- UND TURBINEN-UNION MÜNCHEN GMBH, Dachauer Strasse 665 Postfach 50 06 40, D-8000 München 50 (DE)**

(72) Erfinder: **Betz, Wolfgang, Dr.-Ing., Grubmühlerfeldstrasse 15, D-8035 Gauting (DE)**

(54) **Strömungskraftmaschine.**

(57) Bei einer Strömungskraftmaschine zur Umwandlung von Strömungsenergie in Nutzenergie sind im wesentlichen gleich ausgebildete Bauteile vorgesehen, die sich längs einer geschlossenen Umlaufbahn gleichsinnig bewegen. Die Umlaufbahn ist über zumindest zwei Umlenkrollen geführt oder durch diese festgelegt, wobei die Umlaufbahn und/oder die Bauteile im Umlenkbereich der Rollen in einem Kraftübertragungseingriff zu den Umlenkrollen stehen können. Die Bauteile sind nach Art eines Segels aufgebaut oder ähnlich ausgebildet und besorgen im Betrieb bei einem Auftreffen von Strömungsenergie (z.B. Wind) einen Drehantrieb der Umlenkrollen, an denen beispielsweise ein Stromgenerator angekoppelt sein kann.

0135748

MTU MOTOREN- UND TURBINEN-UNION
MÜNCHEN GMBH

---

## Strömungskraftmaschine

---

Die Erfindung betrifft eine Strömungskraftmaschine zur Umwandlung von Strömungsenergie in Nutzenergie.

Strömungskraftmaschinen üblicher Bauart sind mit Bauteilen ausgestattet, die zwecks Aufnahme der Strömungsenergie
sich auf einer Kreisbahn um eine Achse bewegen. Dies hat
den Nachteil, daß bei zu großen Einheiten sehr große Fliehkräfte wirksam werden, die sowohl die statische als auch
die dynamische Festigkeit bzw. Charakteristik unter Umständen stärker beeinträchtigen. Darüber hinaus ist es
von Nachteil, daß die Relativbewegung zwischen den einzelnen Teilbereichen der Bauteile und dem strömenden Medium
sich fortwährend verändert, und zwar mit Abstand von der
Rotationsachse. Diesem Umstand muß bei der Konzeption des
Bauteils Rechnung getragen werden, mit dem Ergebnis, daß
strömungsgünstige Profile mit einem hohen Wirkungsgrad
einer Energieumsetzung zumeist eine komplizierte Konfiguration aufweisen.

Aufgabe der Erfindung ist die Schaffung einer Strömungskraftmaschine der eingangs genannten Art, bei der vorge-

ESP-745

nannte Nachteile praktisch nicht vorhanden sind und insbesondere eine Strömungskraftmaschine mit einem einfachen Aufbau und günstigem Wirkungsgrad einer Energieumwandlung geschaffen wird, bei der statische Festigkeitsprobleme praktisch keine Rolle spielen und sich eine gute dynamische Betriebscharakteristik einstellt, insbesondere im Hinblick auf Schwingung und Dämpfung.

Gelöst wird die der Erfindung zugrundeliegende Aufgabe dadurch, daß zur Kraftaufnahme der Strömungsenergie im wesentlichen gleich ausgebildete Bauteile vorgesehen sind, die sich längs einer geschlossenen Umlaufbahn einsinnig bewegen, welche über zumindest zwei Umlenkrollen geführt oder festgelegt ist, wobei die Umlaufbahn und/oder die Bauteile im Umlenkbereich der Rollen in einen Kraftübertragungseingriff mit den Umlenkrollen bringbar ist bzw. sind.

Zweckmäßigerweise sind benachbarte Bauteile fest miteinander in gelenkiger Weise nach Art von Kettengliedern verbunden.

Die Umlaufbahn verläuft in vorteilhafter Weiterbildung der Erfindung zwischen den Umlenkrollen zumindest teilweise linear und parallel, so daß sich insgesamt ein kompakter Aufbau einer Strömungskraftmaschine ergibt und eine im Betrieb vorhandene Strömungsrichtung der Strömungsenergie optimal ausgenützt wird (z.B. Wind). Geringe Fliehkräfte und ein gutes Schwingungsverhalten stellen sich ein, wenn

ESP-745

mindestens ein
Teilbereich der Umlenkbahn nicht kreisrund in stetiger
Weise ausgebildet ist oder mindestens zwei verschiedene
Krümmungsmittelpunkte der Umlenkbahn besitzt.

Die Bauteile können in besonders vorteilhafter Weiterbildung nach Art eines Segels aufgebaut sein. Damit können
beispielsweise auf einfache Weise unter Ausnützung der
bekannten Segeltechnik durch die Erfindung Windgeneratoren
konzipiert werden.

Ein besonders günstiger Energie_umsetzungswirkungsgrad
stellt sich ein, wenn die Bauteile praktisch im gesamten
Umlaufbereich kraftübertragungswirksam einsetzbar sind.
Insbesondere befindet sich im inneren Umlaufbahnbereich
zwischen den Umlenkrollen zumindest ein stationäres Leitgitter.

Ist das Bauteil nach Art eines Segels aufgebaut, besitzt
es zwecks Abstützung einen äußeren Stützrahmen auf dem
Umfang des Segels, der an Obergurt-Untergurt-Seilen befestigt ist, wobei die Seile um die Umlenkrollen geführt
sind und die Umlaufbahn bestimmen.

Der Stützrahmen ist zweckmäßigerweise schwenkbar ausgebildet. Insbesondere weist er längs seiner in Umlaufrichtung vorne gelegenen Hochkante eine Anlenkachse zwischen
den Obergurt- und den Untergurt-Längsseilen auf, und es
ist die Anlenkachse an den Seilen befestigt. Die Anlenkachse ihrerseits kann mit Vertiefungen auf dem Umfang
der Umlenkrollen in einen Kraftübertragungseingriff gebracht werden.

ESP-745

Kraftübertragungsteile

wie Antriebswellen, Kraftübertragungs-Umlenkrollen sind vorzugsweise aus Metall. Mithin kann durch die Erfindung eine einfach gestaltete Strömungskraftmaschine mit Hilfe einfacher Mittel hergestellt werden. Festigkeitsprobleme im statischen wie im dynamischen Bereich entstehen kaum. Die Relativbewegung zwischen einzelnen Teilbereichen der Bauteile und dem durchströmenden Medium ändert sich nicht, was einfache strömungsgünstige Segel oder Schaufeln zuläßt. Gleichwohl lassen sich durch die Erfindung gute Wirkungsgrade einer Energie umsetzung realisieren. Die Umlenkrollen stehen in einer festen Verbindung mit einer zentralen Achse, die sich unter Ausnutzung von Strömungsenergie, beispielsweise durch Wind oder Wasser, in Drehbewegung versetzen läßt. Die Antriebswelle kann direkt mit einem angeschlossenen Generatorsystem zwecks Erzeugung von elektrischer Energie gekoppelt sein.

Die Erfindung wird nachfolgend anhand zweier Ausführungsbeispiele unter Bezugnahme auf die Zeichnung näher erläutert; es zeigen:

Fig. 1 eine schematische Axialansicht auf eine Strömungskraftmaschine,

ESP-745

Fig. 2 die Strömungskraftmaschine nach Fig. 1 in schematischer Teil-Draufsicht.

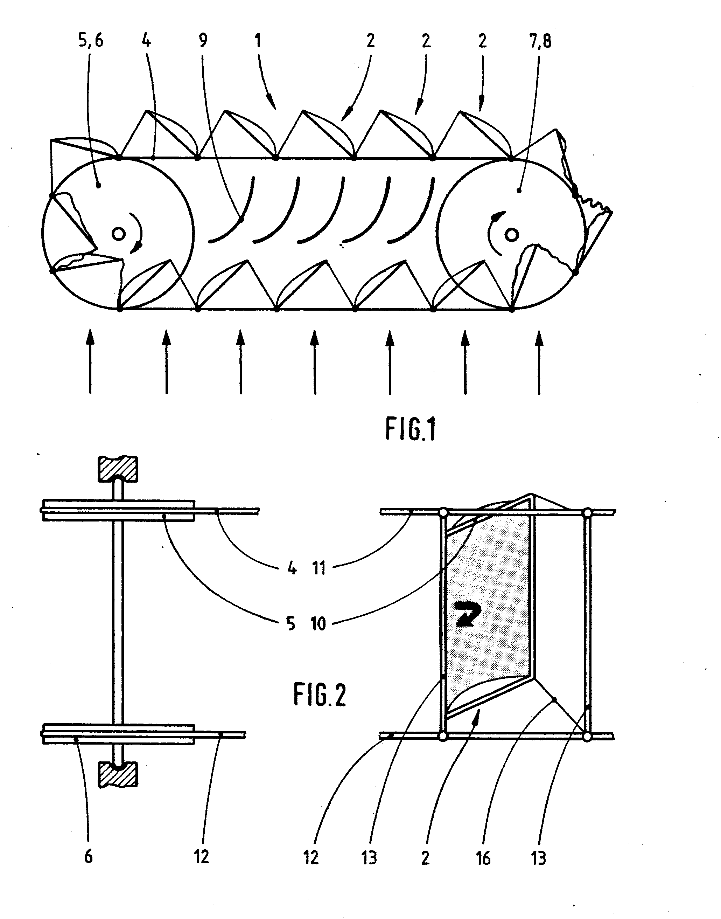

In den Figuren 1 und 2 ist ein Ausführungsbeispiel einer Strömungskraftmaschine 1 gezeigt, die im wesentlichen aus einer geschlossenen Umlaufbahn 4 mit daran befestigten im wesentlichen gleich ausgebildeten Bauteilen 2 besteht. Die Umlaufbahn 4 läuft im Betrieb im Uhrzeigersinn um Umlenkrollen 5, 6 auf der einen und Umlenkrollen 7, 8 auf der anderen Seite. Zugehörige Umlenkrollen 5, 6 bzw. 7, 8 sind drehfest mit einer zentralen Achse befestigt, wobei die Rollen 5, 6 bzw. 7, 8 voneinander beabstandet sind, um einen Zwischenraum aus Gründen zu schaffen, die nachfolgend noch erörtert werden.

Die Umlenkrollenachsen greifen ihrerseits in ein (in der Zeichnung nicht dargestelltes) Abtriebsaggregat ein, beispielsweise in ein Generatorsystem zur Erzeugung elektrischen Stroms.

Die einzelnen Bauteile 2 sind nach Art eines Segels aufgebaut und besitzen einen umfangsseitigen äußeren Stützrahmen 10. Jeder Stützrahmen 10 umfaßt längs seiner in Umlaufrichtung des Bauteils vorne gelegenen Hochkante eine Anlenkachse 13, deren Enden an einem Obergurt-Längsseil 11

ESP-745

.sowie an einem Untergurt-Längsseil 12 befestigt sind. Am entgegengesetzten nicht angelenkten Stützrahmenende ist jeweils ein betätigbares Steuerseil 16 befestigt, um den Winkel des im Stützrahmen eingehängten Segels bezüglich der Umlaufbahn 4 verstellen zu können.

Die Anordnung gemäß den Figuren 1 und 2 steht im Betrieb im wesentlichen senkrecht mit im wesentlichen vertikal verlaufenden Achsen der Umlenkrollen 5, 6 und 7, 8, wobei die Strömungsrichtung des strömenden Mediums im wesentlichen horizontal und senkrecht zum Trum der Umlaufbahn 4 verläuft, das zwischen den Umlenkrollen 5, 6 und 7, 8 gelegen ist. Das strömende Medium ist im Ausführungsbeispiel nach den Figuren 1 und 2 bewegte Luft mit Windrichtung gemäß den gezeigten Pfeilen. Die angeströmten Bauteile 2 blähen sich in ihrem Segelflächenbereich entsprechend auf und erzeugen eine Antriebskomponente senkrecht zur Strömungsrichtung, d.h. in Richtung der Umlaufbahn 4 zwischen den Umlenkrollen. Sämtliche Antriebskraftkomponenten der einzelnen Bauteile ergeben in der Summe eine Antriebskraft, die über die Achsen der Umlenkrollen weiter verwertet werden kann. Durch die Steuerseile 16 werden die Segel in den Halterahmen 10 in einer für die Energieaufnahme günstigen Stellung gehalten.

Beim Umlauf um die Umlenkrollen 5 bis 8 ändern die Segel ihre Stellung, so daß sie auch auf ihrem leeseitigen Weg senkrecht zur Strömungsrichtung Energie aufnehmen können.

Zwischen den umlaufenden Segelreihen sind "feste Segel" in Form eines stationären Leitgitters 9 für die leeseitig laufenden Segel vorgesehen.

Die einzelnen Segel können an den Umlenkrollen 5 bis 8 nach Art eines "Kreuzens" oder nach Art einer "Halse" bewegt werden. Hierbei können die Anlenkachsen 13 gemäß
Zeichnung auf der gesamten Umlaufbahn 4 beibehalten
werden.

ESP-745

0135748

-1-

MTU MOTOREN- UND TURBINEN-UNION
MÜNCHEN GMBH

Patentansprüche

1. Strömungsmaschine zur Umwandlung von Strömungsenergie in Nutzenergie mit aneinandergereihten Bauteilen, die zwischen Umlenkungen derart geführt sind, daß sie, wenigstens teilweise, lineare Bahnen beschreiben und während Vor- und Rücklauf vom Strömungsmedium beaufschlagt werden, dadurch gekennzeichnet, daß die aus der Strömungsenergie Kraft aufnehmenden und übertragenden Bauteile eine faltbare Bespannung aufweisen, mittels Zugelementen miteinander verbunden sind und bei Vor- und Rücklauf auf verschiedenen Seiten des Zugelementes angeordnet sind.

2. Strömungsmaschine nach Anspruch 1, dadurch gekennzeichnet, daß die Bauteile nach Art eines Segels aufgebaut sind.

3. Strömungsmaschine nach Anspruch 1 oder 2, dadurch gekennzeichnet, daß das Segel eine Breite aufweist die geringer ist als der Abstand der Zugelemente zueinander.

ESP-745

4. Strömungsmaschine nach einem der vorhergehenden Ansprüche, dadurch gekennzeichnet, daß jedes Bauteil (2) eine Segelfläche mit einem äußeren Stützrahmen (10) aufweist, der an einem Obergurt- und einem Untergurt-Längsseil (11 bzw. 12) befestigt ist, welche um die Umlenkrollen (5,6, bzw. 7,8) geführt sind.

5. Strömungsmaschine nach einem der vorhergehenden Ansprüche, dadurch gekennzeichnet, daß der schwenkbare Stützrahmen (10) längs seiner in Umlaufrichtung vorne gelegene Hochkante eine Anlenkachse (13) zwischen dem Obergurt- und Untergurt.Längsseilen (11,12) aufweist, und die Anlenkachse (13) an den Seilen befestigt ist.

6. Strömungsmaschine nach einem der vorhergehenden Ansprüche, dadurch gekennzeichnet, daß die Anlenkachse (13) in einem Kraftübertragungseingriff mit den Umlenkrollen bringbar ist.

7. Strömungsmaschine nach einem der vorhergehenden Ansprüche, dadurch gekennzeichnet, daß das nichtangelenkte Stützrahmenende zwecks Winkelverstellung des Bauteils (2) zur Umlaufbahn mit einem betätigbaren Steuerseil (16) verbunden ist.

8. Strömungsmaschine nach einem der vorhergehenden Ansprüche, dadurch gekennzeichnet, daß wenigstens ein festes Segel den umlaufenden Segeln in Strömungsrichtung des Mediums vorgeschaltet ist (sind).

9. Strömungsmaschine nach einem der vorhergehenden Ansprüche, dadurch gekennzeichnet, daß sie lagenveränderlich einsetzbar, insbesondere um eine Achse einer Umlenkrolle schwenkbar ist.

ESP-745

FIG.1

FIG.2